# FASCICULE DE BREVET EUROPEEN

(11) **EP 3 489 118 B1**
(45) Date de publication et mention de la délivrance du brevet: **26.08.2020**
(21) Numéro de dépôt: 18207868.3
(22) Date de dépôt: 22.11.2018
(51) Int. Cl.: B62D 65/02, B62D 65/16, B62D 35/00

(54) **DISPOSITIF D AJUSTEMENT EN POSITION D'UN BECQUET RAPPORTÉ DE VÉHICULE AUTOMOBILE**
VORRICHTUNG ZUR POSITIONSEINSTELLUNG EINES AUFSATZ-SPOILERS EINES KRAFTFAHRZEUGS
DEVICE FOR ADJUSTING THE POSITION OF A SPOILER MOUNTED ON A MOTOR VEHICLE

(30) Priorité: 24.11.2017 FR 1761133
(43) Date de publication de la demande: 29.05.2019
(73) Titulaire: RENAULT s.a.s., 92100 Boulogne-Billancourt (FR)
(72) Inventeur: GUERLIN, Philippe, 91540 MENNECY (FR)

(56) Documents cités:
- WO-A1-00/55510
- DE-A1- 10 101 318
- DE-A1-102010 036 856
- FR-A1- 2 660 024
- US-A1- 2006 143 892
- US-A1- 2015 307 139

## Description

L'invention concerne une caisse de véhicule automobile comprenant des premier et deuxième éléments de carrosserie et un dispositif d'ajustement en position d'un premier élément de carrosserie sur le deuxième élément de carrosserie. L'invention concerne encore un véhicule automobile comprenant un tel élément structurant. L'invention concerne enfin un procédé de réglage de la position d'un premier élément de carrosserie utilisant un tel dispositif d'ajustement.

Un véhicule automobile de l'état de la technique comprend généralement une caisse sur laquelle sont assemblés divers éléments de carrosserie. Parmi ces éléments de carrosserie, l'extrémité arrière d'un toit ou pavillon, jouxte généralement un ouvrant arrière, par exemple de type hayon, au niveau d'un becquet fixé sur ce hayon.

Le document DE 10 2010 036856 A1 décrit une caisse de véhicule selon le préambule de la revendication 1 et respectivement 9.

La qualité d'un véhicule automobile étant souvent évaluée par les consommateurs à partir de l'apparence de la carrosserie, les affleurements entre les éléments de carrosserie contigus revêtent une certaine importance. Ainsi, des affleurements faibles voire nuls entre les éléments de carrosserie sont interprétés comme une excellente qualité de finition. Seulement, pour un becquet arrière, il est complexe d'obtenir un affleurement constant et faible avec l'extrémité arrière du pavillon.

Le but de l'invention est de proposer un dispositif d'ajustement en position d'un becquet arrière par rapport à l'extrémité arrière d'un pavillon de véhicule automobile remédiant aux inconvénients ci-dessus. En particulier, l'invention permet de réaliser un ajustement d'affleurement qui soit aisé, rapide et reproductible sur une chaîne de montage.

Pour atteindre cet objectif, l'invention porte sur une caisse de véhicule automobile comprenant un premier élément de carrosserie de type becquet, un deuxième élément de carrosserie de type partie arrière de pavillon et un dispositif d'ajustement en position du premier élément de carrosserie par rapport au deuxième élément de carrosserie comprenant au moins :
- une cale fixe destinée à être fixée sur un élément structurant d'un tel véhicule automobile, la cale fixe comprenant un moyen de fixation de la cale fixe sur un tel élément structurant au niveau d'une surface de fixation de la cale fixe, la cale fixe comprenant une surface d'appui opposée à la surface de fixation,
- une cale réglable par rapport à la cale fixe, la cale réglable comprenant une surface de réglage venant en vis-à-vis, ou sensiblement en vis-à-vis, de la surface d'appui de la cale fixe, et
- un moyen de maintien en position de la cale réglable par rapport à la cale fixe.

La cale fixe peut comprendre un premier moyen de pré-maintien de la cale réglable et/ou la cale réglable peut comprendre un deuxième moyen de pré-maintien de la cale fixe.

Le premier moyen de pré-maintien peut comprendre un premier crantage sur la surface d'appui de la cale fixe, notamment un premier crantage en forme d'escalier ou sensiblement en forme d'escalier, le deuxième moyen de pré-maintien pouvant comprendre un deuxième crantage sur la surface de réglage de la cale réglable complémentaire au premier crantage, notamment un deuxième crantage en forme complémentaire d'escalier ou sensiblement en forme complémentaire d'escalier, de sorte à s'imbriquer, ou à s'imbriquer sensiblement, l'un dans l'autre.

Le premier moyen de pré-maintien peut comprendre des premières lames souples coulissant dans des premières rainures de la cale réglable et/ou le deuxième moyen de pré-maintien peut comprendre des deuxièmes lames souples coulissant dans des deuxièmes rainures de la cale fixe.

La cale fixe et/ou la cale réglable peut présenter une forme de biseau.

Un premier trou peut être ménagé au sein de la cale fixe, un deuxième trou pouvant être ménagé au sein de la cale réglable, notamment un premier trou et/ou un deuxième trou oblong, de sorte à permettre le passage du moyen de maintien en position, notamment du moyen de maintien en position de type vis-écrou.

La cale réglable peut comprendre une surface de réception du premier élément de carrosserie, notamment une surface de réception opposée à la surface de réglage.

La cale fixe peut comprendre un premier moyen d'étanchéité sur la surface de fixation de la cale fixe sur un tel élément structurant, notamment un premier joint en forme d'anneau, et/ou la cale réglable peut comprendre un deuxième moyen d'étanchéité sur la surface de réception du premier élément de carrosserie, notamment un deuxième joint en forme d'anneau.

L'invention porte encore sur un procédé de réglage de la position d'un premier élément de carrosserie d'un véhicule automobile, notamment un premier élément de carrosserie de type becquet, par rapport à un deuxième élément de carrosserie d'un tel véhicule automobile, notamment un deuxième élément de type partie arrière de pavillon, comprenant les étapes suivantes :
- mise en place d'un gabarit reprenant des caractéristiques dimensionnelles du premier élément de carrosserie, sur un élément structurant d'un tel véhicule automobile, au niveau d'un emplacement prévu pour le premier élément de carrosserie, et/ou en appui sur le deuxième élément de carrosserie,
- réglage du positionnement de chaque cale réglable d'un dispositif d'ajustement en position tel que défini précédemment, notamment en amenant chaque cale réglable en contact avec le gabarit,
- dépose du gabarit,
- pose du premier élément de carrosserie sur chaque cale réglable, notamment sur une surface de réception de chaque cale réglable,
- blocage en position du premier élément de carrosserie par l'intermédiaire de chaque moyen de maintien en position.

L'invention porte enfin sur un véhicule automobile comprenant au moins une caisse telle que définie précédemment.

Ces objets, caractéristiques et avantages de la présente invention seront exposés en détail dans la description suivante d'un mode de réalisation fait à titre non-limitatif en relation avec les figures jointes parmi lesquelles:
La figure 1 représente une vue de côté schématique d'un véhicule automobile selon un mode de réalisation, un becquet arrière et un gabarit étant représentés superposés.
La figure 2 représente une vue de côté schématique d'une caisse de véhicule automobile selon un mode de réalisation.
La figure 3 représente une vue en coupe selon un plan vertical longitudinal d'une cale réglable et d'une cale fixe d'un dispositif d'ajustement en position d'un becquet arrière selon un mode de réalisation, la cale réglable étant dans une position intermédiaire.
La figure 4 représente une vue de côté de la cale réglable associée à la cale fixe du dispositif d'ajustement en position d'un becquet arrière selon le mode de réalisation, la cale réglable étant représentée simultanément dans les positions haute, intermédiaire et basse.
La figure 5 représente une section passant par des lames souples de la cale réglable du dispositif d'ajustement en position d'un becquet arrière selon le mode de réalisation.
La figure 6 représente une autre vue de côté du véhicule automobile selon le mode de réalisation, le becquet arrière et le gabarit étant représentés simultanément.
La figure 7 représente une autre vue de côté de la caisse de véhicule automobile selon le mode de réalisation, le becquet arrière étant ajusté correctement.
La figure 8 représente une autre vue de côté de la caisse de véhicule automobile selon le mode de réalisation, le becquet arrière étant ajusté trop haut.

La direction selon laquelle un véhicule automobile se déplace habituellement en ligne droite est définie comme étant la direction longitudinale X. Par convention, la direction perpendiculaire à la direction longitudinale, située dans un plan parallèle au sol, est nommée direction transversale Y. La troisième direction, perpendiculaire aux deux autres, est nommée direction verticale Z. Le sens « avant » correspond au sens dans lequel le véhicule automobile se déplace habituellement dans la direction longitudinale, et est opposé au sens « arrière ».

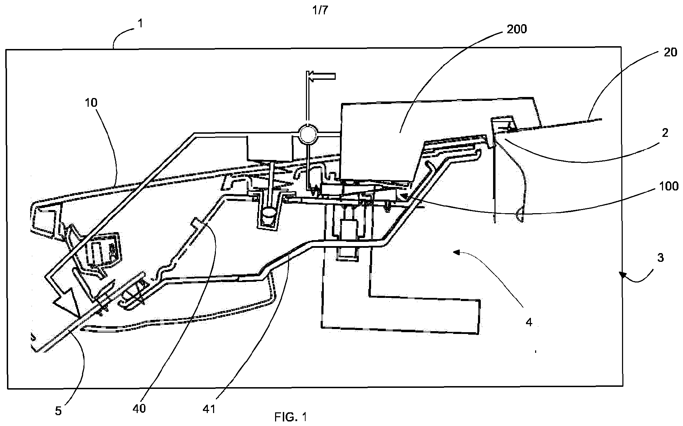

Comme illustré sur la figure 1, un véhicule automobile 1 selon le mode de réalisation comprend une caisse 3 sur laquelle est fixé un ouvrant, ici un hayon 4. Ce hayon 4 est doté d'un ou plusieurs éléments structurants, par exemple un caisson aussi appelé doublure 41 et/ou un renfort 40 de doublure. L'élément structurant selon le mode de réalisation comprend un dispositif 100 d'ajustement en position d'un premier élément 10 de carrosserie, par exemple de type becquet arrière, par rapport à un deuxième élément 20 de carrosserie, par exemple un pavillon. Le pavillon 20 est doté d'une partie arrière ou extrémité arrière, aussi appelée nez 2. Le hayon 4 comprend par exemple une vitre ou lunette arrière 5. Le becquet arrière 10 est rapporté sur le renfort 40 de la doublure 41 du hayon 4. Le becquet arrière 10 est par exemple en matière plastique.

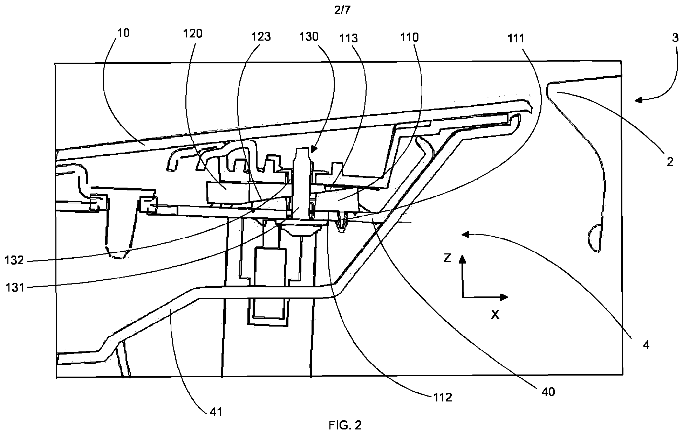

Comme illustré plus précisément sur la figure 2, le dispositif 100 d'ajustement en position du becquet arrière 10 du véhicule automobile 1 par rapport au nez arrière 2 du pavillon 20 comprend une cale fixe 110, une cale réglable 120 et un moyen de maintien en position 130 de la cale réglable 120 par rapport à la cale fixe 110. A noter que sur la figure 2, la cale réglable 120 est en position basse.

La cale fixe 110 est destinée à être fixée sur le renfort 40 de la doublure 41 du hayon 4. Pour ce faire, la cale fixe 110 comprend un moyen de fixation 111 de la cale fixe 110 au niveau d'une surface de fixation 112 de la cale fixe 110. Ce moyen de fixation 111 comprend par exemple au moins un pion ou clips apte à se clipser dans au moins un orifice ménagé au niveau du renfort 40. De préférence, le moyen de fixation comprend trois clips 111 de sorte à bien immobiliser la cale fixe 110 sur le hayon 4 au niveau du renfort 40 réalisé par exemple en matière thermoplastique.

La cale fixe 110 comprend une surface d'appui 113 opposée à la surface de fixation 112. La cale réglable 120 comprend une surface de réglage 123 venant en vis-à-vis, ou sensiblement en vis-à-vis, de la surface d'appui 113 de la cale fixe 110.

De préférence, la cale fixe 110 comprend un premier moyen de pré-maintien de la cale réglable 120. De préférence également, la cale réglable 120 comprend un deuxième moyen de pré-maintien de la cale fixe 110.

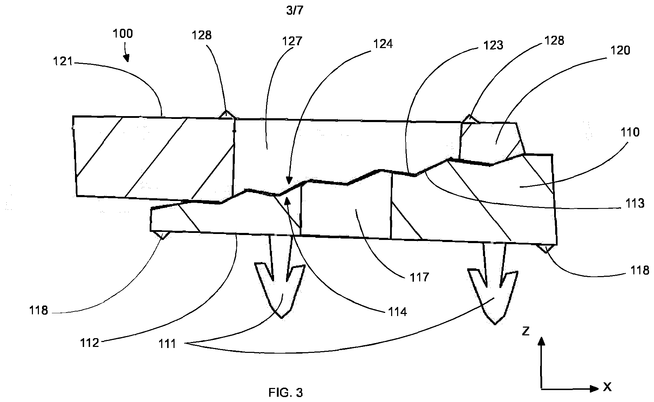

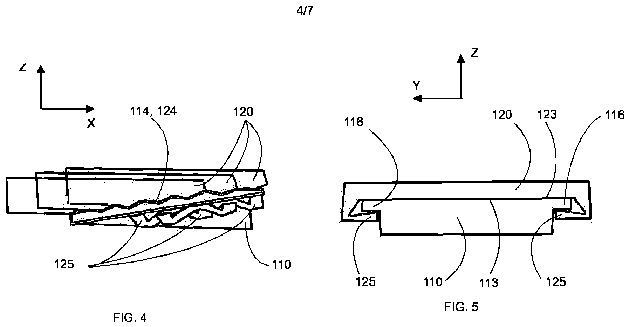

Comme illustré sur la figure 3, le premier moyen de pré-maintien comprend un premier crantage 114 sur la surface d'appui 113 de la cale fixe 110, par exemple un premier crantage 114 en forme d'escalier ou sensiblement en forme d'escalier. Le deuxième moyen de pré-maintien comprend un deuxième crantage 124 sur la surface de réglage 123 de la cale réglable 120 complémentaire au premier crantage 114, par exemple un deuxième crantage 124 en forme complémentaire d'escalier ou sensiblement en forme complémentaire d'escalier. Ainsi le premier crantage 114 de la cale fixe 110 et le deuxième crantage 124 de la cale réglable 124 s'imbriquent, ou s'imbriquent sensiblement, l'un dans l'autre. Ces premier et deuxième crantages 114, 124 offrent des possibilités de réglage de la cale réglable 120 par rapport à la cale fixe 110 avec un pas de l'ordre de 2 mm par exemple suivant la direction longitudinale X. Ainsi, comme illustré sur la figure 4, les premier et deuxième crantages 114, 124 permettent par exemple trois positions différentes de la cale réglable 120 par rapport à la cale fixe 110. Par exemple, la cale réglable 120 peut être placée dans une position basse (à gauche sur la figure 4), dans une position intermédiaire (au centre sur la figure 4) ou dans une position haute (à droite sur la figure 4). La plage totale de réglage de la cale réglable 120 selon la direction verticale Z est par exemple de l'ordre de plus ou moins 1,5 mm, soit une amplitude verticale en Z de l'ordre de 3 mm.

Comme illustré sur la figure 5, le deuxième moyen de pré-maintien comprend des deuxièmes lames souples 125, coulissant par exemple dans des deuxièmes rainures 116 de la cale fixe 110 ou au niveau d'un épaulement de la cale fixe 110. Les lames souples 125 permettent par leur déformation de rappeler la surface d'appui 113 et la surface de réglage 123 l'une contre l'autre.

Avantageusement, la cale fixe 110 et/ou la cale réglable 120 présente une forme de biseau. Par exemple la cale réglable 120 s'épaissit longitudinalement vers l'arrière alors que la cale fixe 110 s'amincit longitudinalement vers l'arrière comme l'illustre la figure 2 par exemple. Evidemment, la cale réglable peut s'amincir longitudinalement vers l'arrière alors que la cale fixe s'épaissit longitudinalement vers l'arrière. De préférence, comme illustré sur la figure 3, la cale réglable 120 comprend une surface de réception 121 pour le becquet 10, par exemple une surface de réception 121 opposée à la surface de réglage 123. La surface de réception 121 est une surface contre laquelle le becquet 10 vient en appui lorsqu'il est fixé sur le hayon 4. Avantageusement, la surface de réception 121 de la cale réglable 120 est parallèle, ou sensiblement parallèle, à la surface de fixation 112 de la cale fixe 110 sur le renfort 40 de la doublure 41 du hayon 4. La surface de réception 121 et la surface de fixation 112 peuvent alors être horizontales ou sensiblement horizontales, ou non, c'est-à-dire orientées vers le haut ou vers le bas en avant. A noter que la surface de réception 121 peut aussi être inclinée par rapport à la surface de fixation 112.

Comme illustré en particulier sur la figure 3, un premier trou 117 est ménagé au sein de la cale fixe 110. Un deuxième trou 127 est ménagé au sein de la cale réglable 120. Les premier et deuxième trous 117, 127 sont de préférence d'axe vertical ou sensiblement d'axe vertical. Avantageusement, le premier trou 117 et/ou le deuxième trou 127 est oblong. Les premiers et deuxième trous 117, 127 permettent le passage du moyen de maintien en position 130, par exemple de type vis-écrou. Par exemple, le deuxième trou 127 est oblong selon la direction longitudinale X et offre, même traversé par le moyen de maintien en position 130, un déplacement d'une plage de l'ordre de plus ou moins 6 mm de la cale réglable 120 par rapport à la cale fixe 110, soit de l'ordre de 12 mm selon plus ou moins trois fois un pas de 2 mm selon la direction longitudinale.

Comme illustré sur la figure 3, préférentiellement, la cale fixe 110 comprend un premier moyen d'étanchéité 118 sur la surface de fixation 112 de la cale fixe 110 sur le hayon 4, par exemple un premier joint en forme d'anneau. De préférence encore, la cale réglable 120 comprend un deuxième moyen d'étanchéité 128 sur la surface de réception 121 du becquet 10, par exemple un deuxième joint en forme d'anneau. Le premier moyen d'étanchéité 118 peut être un ou plusieurs cordons surmoulés, par exemple disposés à la périphérie de la surface de fixation 112. De même, le deuxième moyen d'étanchéité 128 peut être un ou plusieurs cordons surmoulés, par exemple disposés à la périphérie de la surface de réception 121 et/ou au niveau du bord du deuxième trou 127 oblong.

Il est à noter que dans le mode de réalisation décrit, le moyen de maintien en position 130 assure le maintien en positions relatives des cale fixe 110 et réglable 120 et assure la fixation du becquet 10 sur le renfort 40 de la doublure 41 du hayon 4.

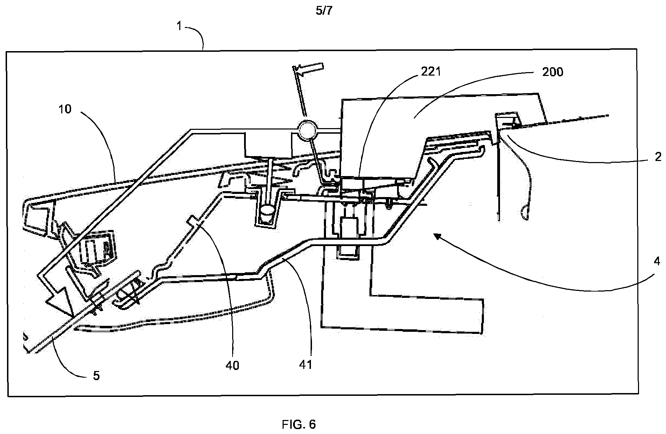

A noter que la cale fixe 110 et la cale réglable 120 sont positionnées et réglées avant la mise en place du becquet 10. Pour ce faire, un gabarit 200 est prévu comme illustré sur les figures 1 et 6. Sur ces figures 1 et 6, le gabarit 200 et le becquet 10 sont représentés simultanément.

Un mode d'exécution du procédé de réglage de la position selon l'invention est décrit ci-après.

En pratique, le gabarit 200 est monté sur la ligne de montage, préalablement au montage du becquet 10, afin de régler de manière optimale la cale réglable 120 du dispositif 100. Ainsi, le gabarit 200 comprend par exemple un référentiel longitudinal et un référentiel vertical au niveau du nez 2 du pavillon 20. Le gabarit 200 comprend par exemple également un référentiel au niveau de la lunette 5 du hayon 4 afin d'être orienté autour de la direction transversale Y. Ainsi, ces trois référentiels ou points particuliers du gabarit 200, par exemple des plots collés, viennent se positionner à des points spécifiques de la caisse 3. Ceci permet de positionner complètement le gabarit 200 relativement au renfort 40.

Le gabarit 200 permet alors de régler le dispositif 100 d'ajustement en position du becquet 10 par le biais du procédé suivant.

Dans un premier temps, une étape de mise en place du gabarit 200 reprenant des caractéristiques dimensionnelles de la caisse 3, au niveau d'un emplacement prévu pour le becquet 10 et/ou en appui sur le deuxième élément 20 de carrosserie, en particulier via les points spécifiques évoqués précédemment, est réalisée.

S'ensuit une étape de réglage selon la direction verticale Z du positionnement de chaque cale réglable 120, en particulier en amenant chaque cale réglable 120 en contact avec le gabarit 200. Ainsi, la surface de réception 121 de chaque cale réglable 120 est amenée au contact d'une surface 221 du gabarit 200. Autrement dit, on ajuste selon la direction verticale chaque cale réglable 120 par déplacement d'un ou plusieurs crans du deuxième crantage 124 par rapport au premier crantage 114. Le déplacement d'un cran à un autre cran le jouxtant génère une déformation des deuxièmes lames souples 125 qui chevauchent les bords latéraux d'une cale fixe 110 et viennent coulisser contre les deuxièmes rainures 116 de cette cale fixe 110.

S'ensuit une étape de dépose du gabarit 200, chaque cale réglable 120 restant réglée par rapport à la cale fixe 110 à laquelle elle est associée. En effet, les deuxièmes lames souples 125 associées aux premier et deuxième crantages 114, 124 maintiennent en position chaque cale réglable 120. Ainsi, la cale réglable 120 est figée selon les directions verticale Z et longitudinale X après l'opération de réglage, tant qu'on n'exerce pas d'effort sur chaque cale réglable 120.

S'ensuit une étape de mise en place du becquet 10, en particulier sur la surface de réception 121 de chaque cale réglable 120.

S'ensuit enfin une étape de blocage en position du becquet 10 par l'intermédiaire de chaque moyen de maintien en position 130, par exemple de type vis-écrou. Comme illustré sur la figure 2, une vis 131 traverse par exemple la cale fixe 110 puis la cale réglable 120 avant de venir se visser dans un écrou 132 fixé dans le becquet 10. Cette dernière étape de blocage assure d'une part le verrouillage de la cale réglable 120 sur la cale fixe 110 du fait de l'effort issu du serrage de la vis 131 avec l'écrou 132, effort se répercutant entre la surface d'appui 113 et la surface de réglage 123 munies respectivement du premier et du deuxième crantage 114, 124. D'autre part, cette étape assure le maintien en position du becquet 10 sur le hayon 4 et engendre l'étanchéité au niveau des moyens d'étanchéité 118, 128 par compression de ceux-ci. A noter qu'en plus de créer un pas précis de réglage, le premier et le deuxième crantage 114, 124 évitent le glissement de la surface d'appui 113 par rapport à la surface de réglage 123 au cours de l'application du couple de serrage requis.

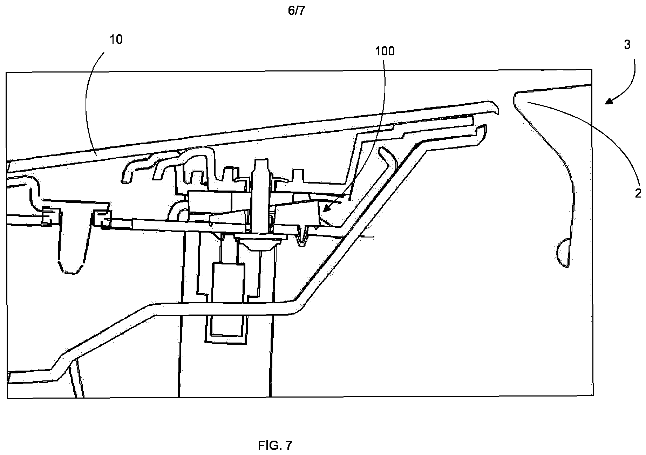

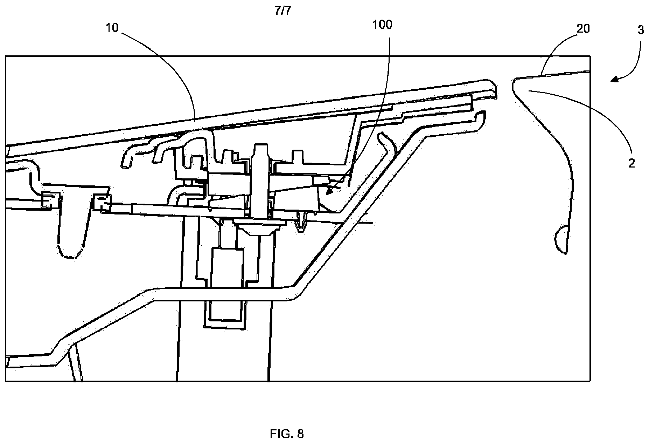

En résumé, comme illustré sur les figures 2, 7 et 8, l'affleurement du becquet 10 peut être réglé selon la direction verticale Z. Le réglage recherché est celui illustré sur la figure 7, la ligne du pavillon 20 se prolongeant sur le becquet 10.

Alternativement, le premier moyen de pré-maintien comprend des premières lames souples coulissant dans des premières rainures de la cale réglable 120.

De préférence, chaque cale fixe 110 et chaque cale réglable 120 à laquelle la cale fixe 110 est associée sont pré-positionnées l'une par rapport à l'autre avant d'être placées sur le hayon 4, préalablement au début du procédé évoqué ci-dessus, procédé mis en œuvre sur une ligne de production ou assemblage de véhicules automobiles. La cale réglable 120 est par exemple placée au maximum en arrière, c'est-à-dire en position basse comme illustré à gauche sur la figure 4.

Préférentiellement, chacun des points de fixation localisé à proximité du nez 2 du pavillon 20, le long de la partie avant du becquet 10, comprend une cale réglable 120. A titre d'exemple, la partie avant du becquet peut comprendre cinq points de fixation, chacun utilisant une cale réglable 120. Les étapes de réglage et de blocage sont répétées autant de fois qu'il y a de points de fixation ayant un effet sur la qualité d'assemblage du becquet 10 par rapport au pavillon 20. Le becquet 10 étant déformable du fait de sa conception en matière plastique souple, le réglage des différentes cales réglables 120 permet de respecter une contrainte d'assemblage portant à la fois sur une continuité de cote et sur un affleurement prédéterminé de la partie avant du becquet 10 par rapport au nez 2 de pavillon 20.

Avantageusement des butées peuvent être prévues sur la cale réglable 120 et/ou sur la cale fixe 110 afin que les deux positions extrêmes de la cale réglable 120 ne soient pas dépassées au cours de la manutention précédant l'étape de réglage. Ainsi, la vis 131 peut être insérée quelle que soit la position de la cale réglable 120 par rapport à la cale fixe 110.

De préférence, aussi bien pour des raisons esthétiques que pour éviter toute perte d'étanchéité, la vis 131 est insérée par le dessous du becquet 10.

De préférence encore, la matière de fabrication de la cale réglable 120 et/ou de la cale fixe 110 est du polyamide PA 66 chargé de l'ordre de 30 à 40 % de fibre de verre.

Ainsi, grâce à ce dispositif 100 d'ajustement en position, il devient aisé d'assurer un affleurement réduit, voire nul, selon la direction verticale Z entre le nez 2 du pavillon 20 et la partie avant du becquet 10, et cela, tout en s'affranchissant des dispersions géométriques du hayon 4 et/ou de la caisse 3 supportant le hayon 4. Le becquet 10 vient alors en appui sur le dispositif 100 d'ajustement en position et crée un assemblage conforme aux jeux et affleurements recherchés. La qualité perçue en termes de finition est alors excellente.

En remarque, la solution atteint donc l'objet recherché de réaliser un affleurement réduit entre un nez de pavillon et un becquet arrière et présente les avantages suivants :
- Elle peut être utilisée sur tous types de véhicules automobiles, en particulier ceux disposant d'un hayon,
- Elle est adaptée à un assemblage sur une ligne de montage.

A noter que l'élément structurant peut encore être tout autre élément structurant que celui décrit.

L'invention est particulièrement bien adaptée à un véhicule automobile doté d'un becquet rapporté. Elle facilite l'étape d'assemblage du becquet sur un élément structurant. Elle porte sur un dispositif d'ajustement en position d'un becquet par rapport au nez arrière de pavillon. Elle porte encore sur un élément structurant comprenant un tel dispositif. Elle porte également sur un véhicule automobile comprenant un tel élément structurant ou un tel dispositif. Elle porte enfin sur un procédé de réglage de la position d'un becquet utilisant un tel dispositif.

## Revendications

1. Caisse (3) de véhicule automobile (1) comprenant un premier élément (10) de carrosserie de type becquet, un deuxième élément (20) de carrosserie de type partie arrière de pavillon et un dispositif (100) d'ajustement en position du premier élément (10) de carrosserie par rapport à au deuxième élément (20) de carrosserie, la caisse de véhicule automobile étant **caractérisée en ce que** le dispositif (100) d'ajustement comprend au moins :
- une cale fixe (110) destinée à être fixée sur un élément structurant (40) d'un tel véhicule automobile (1), la cale fixe (110) comprenant un moyen de fixation (111) de la cale fixe (110) sur un tel élément structurant (40) au niveau d'une surface de fixation (112) de la cale fixe (110), la cale fixe (110) comprenant une surface d'appui (113) opposée à la surface de fixation (112),
- une cale réglable (120) par rapport à la cale fixe (110), la cale réglable (120) comprenant une surface de réglage (123) venant en vis-à-vis, ou sensiblement en vis-à-vis, de la surface d'appui (113) de la cale fixe (110), et
- un moyen de maintien en position (130) de la cale réglable (120) par rapport à la cale fixe (110).

2. Caisse (3) selon la revendication 1, **caractérisée en ce que** la cale fixe (110) comprend un premier moyen de pré-maintien de la cale réglable (120) et/ou la cale réglable (120) comprend un deuxième moyen de pré-maintien de la cale fixe (110).

3. Caisse (3) selon la revendication précédente, **caractérisée en ce que** le premier moyen de pré-maintien comprend un premier crantage (114) sur la surface d'appui (113) de la cale fixe (110), notamment un premier crantage (114) en forme d'escalier ou sensiblement en forme d'escalier, le deuxième moyen de pré-maintien comprenant un deuxième crantage (124) sur la surface de réglage (123) de la cale réglable (120) complémentaire au premier crantage (114), notamment un deuxième crantage (124) en forme complémentaire d'escalier ou sensiblement en forme complémentaire d'escalier, de sorte à s'imbriquer, ou à s'imbriquer sensiblement, l'un dans l'autre.

4. Caisse (3) selon l'une des revendications 2 ou 3, **caractérisée en ce que** le premier moyen de pré-maintien comprend des premières lames souples coulissant dans des premières rainures de la cale réglable (120) et/ou le deuxième moyen de pré-maintien comprend des deuxièmes lames souples (125) coulissant dans des deuxièmes rainures (116) de la cale fixe (110).

5. Caisse (3) selon l'une des revendications précédentes, **caractérisée en ce que** la cale fixe (110) et/ou la cale réglable (120) présente une forme de biseau.

6. Caisse (3) selon l'une des revendications précédentes, **caractérisée en ce qu'**un premier trou (117) est ménagé au sein de la cale fixe (110) et **en ce qu'**un deuxième trou (127) est ménagé au sein de la cale réglable (120), notamment un premier trou (117) et/ou un deuxième trou (127) oblong, de sorte à permettre le passage du moyen de maintien en position (130), notamment du moyen de maintien en position (130) de type vis-écrou.

7. Caisse (3) selon l'une des revendications précédentes, **caractérisée en ce que** la cale réglable (120) comprend une surface de réception (121) du premier élément (10) de carrosserie, notamment une surface de réception (121) opposée à la surface de réglage (123).

8. Caisse (3) selon l'une des revendications précédentes, **caractérisée en ce que** la cale fixe (110) comprend un premier moyen d'étanchéité (118) sur la surface de fixation (112) de la cale fixe (110) sur un tel élément structurant (40), notamment un premier joint en forme d'anneau, et/ou la cale réglable (120) comprend un deuxième moyen d'étanchéité (128) sur la surface de réception (121) du premier élément (10) de carrosserie, notamment un deuxième joint en forme d'anneau.

9. Procédé de réglage de la position d'un premier élément (10) de carrosserie d'un véhicule automobile (1), notamment un premier élément (10) de carrosserie de type becquet, par rapport à un deuxième élément (20) de carrosserie d'un tel véhicule automobile (1), notamment un deuxième élément (20) de type partie arrière de pavillon, **caractérisé en ce qu'**il comprend les étapes suivantes :
- mise en place d'un gabarit (200) reprenant des caractéristiques dimensionnelles du premier élément (10) de carrosserie, sur un élément structurant (40) d'un tel véhicule automobile (1), au niveau d'un emplacement prévu pour le premier élément (10) de carrosserie, et/ou en appui sur le deuxième élément (20) de carrosserie,
- réglage du positionnement de chaque cale réglable (120) d'un dispositif (100) d'ajustement en position selon l'une des revendications précédentes, notamment en amenant chaque cale réglable (120) en contact avec le gabarit (200),
- dépose du gabarit (200),
- pose du premier élément (10) de carrosserie sur chaque cale réglable (120), notamment sur une surface de réception (121) de chaque cale réglable (120),
- blocage en position du premier élément (10) de carrosserie par l'intermédiaire de chaque moyen de maintien en position (130).

10. Véhicule automobile (1), **caractérisé en ce qu'**il comprend au moins une caisse (3) selon l'une des revendications 1 à 8.

## Patentansprüche

1. Karosserie (3) eines Kraftfahrzeugs (1) umfassend ein erstes Karosserieelement (10) vom Spoiler-Typ, ein zweites Karosserieelement (20) vom Verdeckhinterteil-Typ und eine Vorrichtung (100) zur Positionsanpassung des ersten Karosserieelements (10) bezogen auf das zweite Karosserieelement (20), wobei die Kraftfahrzeugkarosserie **dadurch gekennzeichnet ist, dass** die Anpassungsvorrichtung (100) wenigstens Folgendes umfasst:
- einen festen Keil (110), der dazu bestimmt ist, auf einem strukturierenden Element (40) eines derartigen Kraftfahrzeugs (1) befestigt zu sein, der feste Keil (110) umfassend ein Mittel zur Befestigung (111) des festen Keils (110) auf einem derartigen strukturierenden Element (40) an einer Befestigungsfläche (112) des festen Keils (110), der feste Keil (110) umfassend eine Auflagefläche (113) gegenüber der Befestigungsfläche (112),
- einen Keil (120), der bezogen auf den festen Keil (110) einstellbar ist, der einstellbare Keil (120) umfassend eine Einstellfläche (123), die der Auflagefläche (113) des festen Keils (110) gegenüberliegt oder im Wesentlichen gegenüberliegt, und
- ein Mittel zum Inpositionhalten (130) des einstellbaren Keils (120) bezogen auf den festen Keil (110) .

2. Karosserie (3) nach Anspruch 1, **dadurch gekennzeichnet, dass** der feste Keil (110) ein erstes Mittel zum Vorabhalten des einstellbaren Keils (120) und/oder der einstellbare Keil (120) ein zweites Mittel zum Vorabhalten des festen Keils (110) umfasst.

3. Karosserie (3) nach dem vorhergehenden Anspruch, **dadurch gekennzeichnet, dass** das erste Vorabhaltemittel eine erste Rastung (114) auf der Auflagefläche (113) des festen Keils (110) umfasst, insbesondere eine erste treppenförmige oder im Wesentlichen treppenförmige Rastung (114), das zweite Vorabhaltemittel umfassend eine zweite Rastung (124) auf der Einstellfläche (123) des einstellbaren Keils (120) ergänzend zur ersten Rastung (114), insbesondere eine zweite Rastung (124) mit ergänzender Treppenform oder im Wesentlichen ergänzender Treppenform, so dass sie sich ineinander verkeilen oder im Wesentlichen ineinander verkeilen.

4. Karosserie (3) nach einem der Ansprüche 2 oder 3, **dadurch gekennzeichnet, dass** das erste Vorabhaltemittel erste flexible Blätter umfasst, die in ersten Nuten des einstellbaren Keils (120) gleiten, und/oder das zweite Vorabhaltemittel flexible Blätter (125) umfasst, die in zweiten Nuten (116) des festen Keils (110) gleiten.

5. Karosserie (3) nach einem der vorhergehenden Ansprüche, **dadurch gekennzeichnet, dass** der feste Keil (110) und/oder der einstellbare Keil (120) eine schräge Form aufweist.

6. Karosserie (3) nach einem der vorhergehenden Ansprüche, **dadurch gekennzeichnet, dass** ein erstes Loch (117) innerhalb des festen Keils (110) angeordnet ist, und dadurch, dass ein zweites Loch (127) innerhalb des einstellbaren Keils (120) angeordnet ist, insbesondere ein erstes (117) und/oder zweites Langloch (127), um das Hindurchtreten des Inpositionhaltemittels (130) zu erlauben, insbesondere des Inpositionhaltemittels (130) vom Schraube-Mutter-Typ.

7. Karosserie (3) nach einem der vorhergehenden Ansprüche, **dadurch gekennzeichnet, dass** der einstellbare Keil (120) eine Fläche zur Aufnahme (121) des ersten Karosserieelements (10) umfasst, insbesondere eine Aufnahmefläche (121) gegenüber der Einstellfläche (123).

8. Karosserie (3) nach einem der vorhergehenden Ansprüche, **dadurch gekennzeichnet, dass** der feste Keil (110) ein erstes Dichtungsmittel (118) auf der Befestigungsfläche (112) des festen Keils (110) auf einem derartigen strukturierenden Element (40) umfasst, insbesondere eine erste ringförmige Dichtung, und/oder der einstellbare Keil (120) ein zweites Dichtungsmittel (128) auf der Aufnahmefläche (121) des ersten Karosserieelements (10) umfasst, insbesondere eine zweite ringförmige Dichtung.

9. Verfahren zur Einstellung der Position eines ersten Karosserieelements (10) eines Kraftfahrzeugs (1), insbesondere eines ersten Karosserieelements (10) vom Spoiler-Typ, bezogen auf ein zweites Karosserieelement (20) eines derartigen Kraftfahrzeugs (1), insbesondere ein zweites Element (20) vom Verdeckhinterteil-Typ, **dadurch gekennzeichnet, dass** es die folgenden Schritte umfasst:
- Anbringen einer Lehre (200) mit den Abmessungsmerkmalen des ersten Karosserieelements (10) auf einem strukturierenden Element (40) eines derartigen Kraftfahrzeugs (1) an einer Stelle, die für das erste Karosserieelement (10) vorgesehen ist, und/oder in Anlage an dem zweiten Karosserieelement (20),
- Einstellen der Positionierung jedes einstellbaren Keils (120) einer Positionsanpassungsvorrichtung (100) nach einem der vorhergehenden Ansprüche, insbesondere durch Inkontaktbringen jedes einstellbaren Keil (120) mit der Lehre (200),
- Abnehmen der Lehre (200),
- Aufsetzen des ersten Karosserieelements (10) auf jeden einstellbaren Keil (120), insbesondere auf eine Aufnahmefläche (121) jedes einstellbaren Keils (120),
- Positionsfixierung des ersten Karosserieelements (10) mittels jedes Inpositionhaltemittels (130).

10. Kraftfahrzeug (1), **dadurch gekennzeichnet, dass** es mindestens eine Karosserie (3) nach einem der Ansprüche 1 bis 8 umfasst.

## Claims

1. Bodyshell (3) of a motor vehicle (1) comprising a first bodywork element (10) of the spoiler type, a second bodywork element (20) of the rear roof portion type and a device (100) for adjusting the position of the first bodywork element (10) relative to the second bodywork element (20), the motor vehicle bodyshell being **characterized in that** the adjustment device (100) comprises at least:
- a fixed shim (110) intended to be fastened to a structural element (40) of such a motor vehicle (1), the fixed shim (110) comprising a means (111) for fastening the fixed shim (110) to such a structural element (40) at a fastening surface (112) of the fixed shim (110), the fixed shim (110) comprising a bearing surface (113) opposite the fastening surface (112),
- an adjustable shim (120) that is adjustable with respect to the fixed shim (110), the adjustable shim (120) comprising an adjustment surface (123) that comes to face, or essentially face, the bearing surface (113) of the fixed shim (110), and
- a means (130) for holding the adjustable shim (120) in position with respect to the fixed shim (110).

2. Bodyshell (3) according to Claim 1, **characterized in that** the fixed shim (110) comprises a first means for pre-holding the adjustable shim (120) and/or the adjustable shim (120) comprises a second means for pre-holding the fixed shim (110).

3. Bodyshell (3) according to the preceding claim, **characterized in that** the first pre-holding means comprises a first notching (114) on the bearing surface (113) of the fixed shim (110), in particular a first notching (114) with a step shape or essentially a step shape, the second pre-holding means comprising a second notching (124) on the adjustment surface (123) of the adjustable shim (120), matching the first notching (114), in particular a second notching (124) with a matching step shape or essentially a matching step shape, so as to fit or essentially fit into one another.

4. Bodyshell (3) according to either of Claims 2 and 3, **characterized in that** the first pre-holding means comprises first flexible blades that slide in first grooves of the adjustable shim (120) and/or the second pre-holding means comprises second flexible blades (125) that slide in second grooves (116) of the fixed shim (110).

5. Bodyshell (3) according to one of the preceding claims, **characterized in that** the fixed shim (110) and/or the adjustable shim (120) is wedge-shaped.

6. Bodyshell (3) according to one of the preceding claims, **characterized in that** a first hole (117) is created within the fixed shim (110), and **in that** a second hole (127) is created within the adjustable shim (120), in particular an oblong first hole (117), and/or an oblong second hole (127), so as to allow the position-holding means (130), in particular the position-holding means (130) of the screw-and-nut type, to pass through.

7. Bodyshell (3) according to one of the preceding claims, **characterized in that** the adjustable shim (120) comprises a receiving surface (121) for receiving the first bodywork element (10), in particular a receiving surface (121) opposite the adjustment surface (123).

8. Bodyshell (3) according to one of the preceding claims, **characterized in that** the fixed shim (110) comprises a first sealing means (118) on the fastening surface (112) of the fixed shim (110) on such a structural element (40), in particular a first ring-shaped seal, and/or the adjustable shim (120) comprises a second sealing means (128) on the receiving surface (121) for receiving the first bodywork element (10), in particular a second ring-shaped seal.

9. Method for adjusting the position of a first bodywork element (10) of a motor vehicle (1), in particular a first bodywork element (10) of the spoiler type, relative to a second bodywork element (20) of such a motor vehicle (1), in particular a second element (20) of the rear roof portion type, **characterized in that** it comprises the following steps:
- installing a template (200) that reproduces dimensional characteristics of the first bodywork element (10), on a structural element (40) of such a motor vehicle (1), at a location intended for the first bodywork element (10), and/or bearing against the second bodywork element (20),
- adjusting the position of each adjustable shim (120) of a position adjustment device (100) according to one of the preceding claims, in particular bringing each adjustable shim (120) into contact with the template (200),
- removing the template (200),
- installing the first bodywork element (10) on each adjustable shim (120), in particular on a receiving surface (121) of each adjustable shim (120),
- immobilizing the first bodywork element (10) in position using each position-holding means (130).

10. Motor vehicle (1), **characterized in that** it comprises at least one bodyshell (3) according to one of Claims 1 to 8.
